# EUROPEAN PATENT APPLICATION

(11) **EP 2 552 100 A1**
(43) Date of publication of application: **30.01.2013**
(21) Application number: 11175350.5
(22) Date of filing: 26.07.2011
(51) Int. Cl.: H04N 5/225, H04N 13/02, H04N 13/00, H04M 1/00

(54) **Stereoscopic image capturing system**

(71) Applicant: Research in Motion Corporation, Wilmington, DE 19801 (US)
(72) Inventor: DELUCA, Michael Joseph, Sunrise, FL Florida 33323 (US)
(74) Representative: Bryn-Jacobsen, Caelia

(57) **Abstract**

A portable electronic device includes a first image capturing device (108) that is rotatable and configured to capture a first image in a first direction at a first position and a second image in at least a second direction at a second position. A second image capturing device (110) is configured to capture a third image in the first direction at a third position. A processor (716) is coupled to the first (108) and second (110) image capturing devices for generating a representation of a stereoscopic image based on the first and third images.

## Description

### FIELD OF THE DISCLOSURE

The present disclosure generally relates to image capturing systems, and more particularly to stereoscopic image capturing systems for portable electronic devices.

### BACKGROUND

Conventional stereoscopic image capturing systems implemented on a portable communication device, such as a wireless communication device, generally utilize three image capturing devices. For example, two image capturing devices are generally disposed on the front of the portable electronic device for stereoscopic imaging. A single image capturing device is disposed on the back of the portable electronic device for non-stereoscopic imaging. However, the use of three image capturing devices adds unnecessary cost to the portable electronic device and can add additional weight or size to the portable electronic device as well.

### BRIEF DESCRIPTION OF THE DRAWINGS

The accompanying figures where like reference numerals refer to identical or functionally similar elements throughout the separate views, and which together with the detailed description below are incorporated in and form part of the specification, serve to further illustrate various embodiments and to explain various principles and advantages all in accordance with the present disclosure, in which:

FIG. 1 is a block diagram of an operating environment according to one example;

FIG. 2 is shows a front view of a portable electronic device comprising a rotatable image capturing device and a fixed image capturing device according to one example;

FIG. 3 shows a rear view of the portable electronic device of FIG. 2 with the rotatable image capturing device being rotated to the rear portion of the portable electronic device according to one example;

FIG. 4 shows the front view of the portable electronic device of FIG. 2 with the rotatable image capturing device being rotated according to another example;

FIG. 5 is a flow diagram for an image capture management process performed by the user device illustrated in FIG. 1;

FIG. 6 is a block diagram of an image capturing device according to one example; and

FIG. 7 is a block diagram of an electronic device and associated components in which the systems and methods disclosed herein may be implemented.

### DETAILED DESCRIPTION

As required, detailed embodiments are disclosed herein; however, it is to be understood that the disclosed embodiments are merely examples and that the systems and methods described below can be embodied in various forms. Therefore, specific structural and functional details disclosed herein are not to be interpreted as limiting, but merely as a basis for the claims and as a representative basis for teaching one skilled in the art to variously employ the disclosed subject matter in virtually any appropriately detailed structure and function. Further, the terms and phrases used herein are not intended to be limiting, but rather, to provide an understandable description.

The terms "a" or "an", as used herein, are defined as one or more than one. The term plurality, as used herein, is defined as two or more than two. The term another, as used herein, is defined as at least a second or more. The terms "including" and "having" as used herein, are defined as comprising (i.e., open language). The term "coupled" as used herein, is defined as "connected" although not necessarily directly, and not necessarily mechanically.

The term "wireless communication device" is intended to broadly cover many different types of devices that can wirelessly receive signals, and in most cases can wirelessly transmit signals, and may also operate in a wireless communication system. For example, and not for any limitation, a wireless communication device can include any one or a combination of the following: a two-way radio, a cellular telephone, a mobile phone, a smartphone, a two-way pager, a wireless messaging device, a laptop/computer, a personal digital assistant, and other similar devices.

The term "portable electronic device" is intended to broadly cover many different types of electronic devices that are portable. For example, and not for any limitation, a portable electronic device can include any one or a combination of the following: a wireless communication device, a laptop computer, notebook computer, personal computer, Personal Digital Assistant, tablets, gaming units, a tablet computing device and other handheld electronic devices that can be carried on one's person.

Described below are devices and methods for managing the capturing of images. In one example, a portable electronic device comprises a first image capturing device that is configured to capture a first image in substantially a first direction at a first position and a second image in at least substantially a second direction at a second position. A second image capturing device is configured to capture a third image in substantially the first direction at a third position. A processor is coupled to the first and second image capturing devices for generating a representation of a stereoscopic image based on the first and third images.

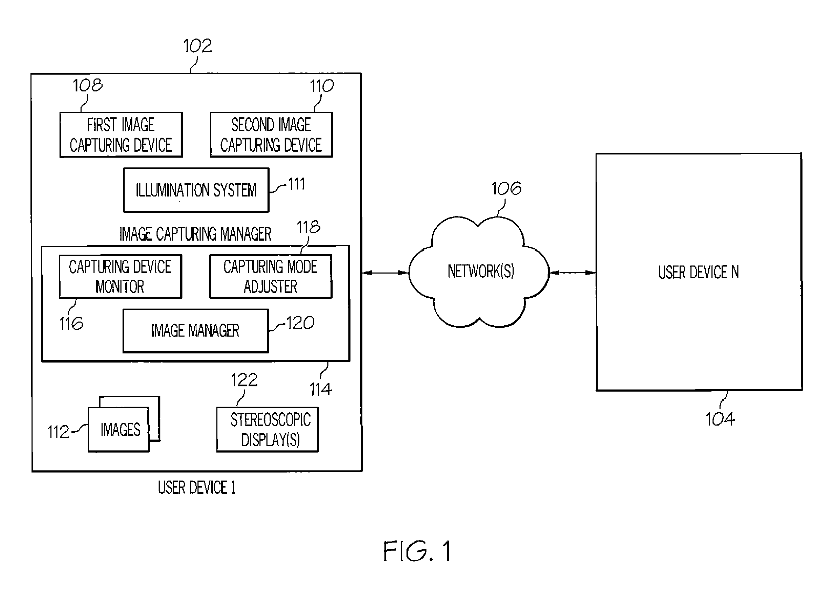

FIG. 1 is a block diagram illustrating one operating environment for a portable electronic device that comprises a stereoscopic image capturing and presentation system. The operating environment 100 comprises a plurality of user devices 102, 104 communicatively coupled to each other through one or more wireless networks 106. The wireless network(s) 110 can include one or more communication networks. The wireless communications standard(s) of the network(s) 110 can comprise Code Division Multiple Access (CDMA), Time Division Multiple Access (TDMA), Global System for Mobile Communications (GSM), General Packet Radio Service (GPRS), Frequency Division Multiple Access (FDMA), Orthogonal Frequency Division Multiplexing (OFDM), Orthogonal Frequency Division Multiple Access (OFDMA), Wireless LAN (WLAN), WiMAX or other IEEE 802.16 standards, Long Term Evolution (LTE), or any other current or future wireless communication standard.

The user devices 102, 104 can be electronic devices such as, but not limited to, wireless communication devices, information processing systems such as notebook, tablet and desktop computers, and/or the like. At least one user device 102 comprises a first image capturing device 108 and a second image capturing device 110 for capturing various types of images 112 such as still images, video, etc. In one example, the first image capturing device 108 is a rotatable image capturing device and the second image capturing device 110 is a fixed image capturing device. However, the second image capturing device 110 can also be rotatable similar to the first image capturing device 108. The user device 102 also comprises one or more illumination systems 111 for illuminating a subject(s) of one or more images to be captured by the image capturing devices 108, 110. The image capturing devices 108, 110 and the illumination system(s) 111 are discussed in greater detail below.

The user device 102 also comprises an image capturing manager 114 that manages the capturing of images by the image capturing devices 108, 110. In one example, the image capturing manager 114 comprises a capturing device monitor 116, a capturing mode adjuster 118, and an image manager 120. The image capturing manager 114 and its components are discussed in greater detail below. The user device 102 also comprises one or more stereoscopic displays 122 for providing stereoscopic images (e.g., 3-dimensional images) to the user. The stereoscopic display 122 is discussed in greater detail below.

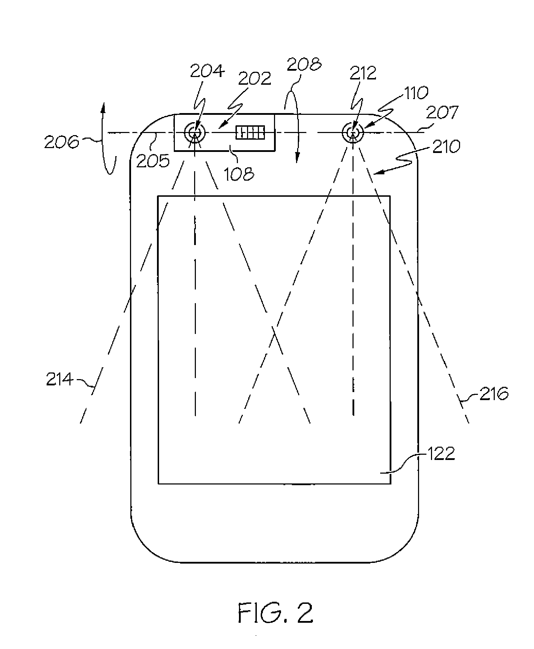

FIGs. 2-4 show a more detailed view of the user device 102 and the image capturing devices 108, 110. In the example of FIGs. 2-4, the user device 102 is a portable electronic device, such as a wireless communication device. FIG. 2 shows a front-side perspective view of the user device 102. As can be seen in FIG. 2, the user device comprises one or more displays 122. In this example, the display 122 is a stereoscopic display capable of displaying stereoscopic and non-stereoscopic images. For example, the display 122 can be an auto-stereoscopic display that comprises a lenticular lens system such that the user is not required to wear specialized optics to experience a three-dimensional effect.

FIG. 2 also shows that the user device 102 comprises a first image capturing device 108 and a second image capturing device 110. The first image capturing device 108, in this example, is a rotatable device such that the first imaging capturing device 108 can be rotated about a first optical axis 205 with respect to the user device 102. For example, first image capturing device 108 can comprise a housing 202 that includes an image capturing system 204. The user is able to rotate the housing 202 from a first rotated position (i.e. facing out from the front side of the user device 102) to a second rotated position (i.e. facing out from the rear side of the user device 102) and any position there between, as indicated by the arrows 206, 208. The first image capturing device 108 is able to capture images 112 from any of these rotated positions via the image capturing system 204. For example, FIG. 2 shows that the first image capturing device 108 has been rotated to the front portion 210 of the user device 102 (i.e., the portion of the user device 102 that faces the user during normal operation).

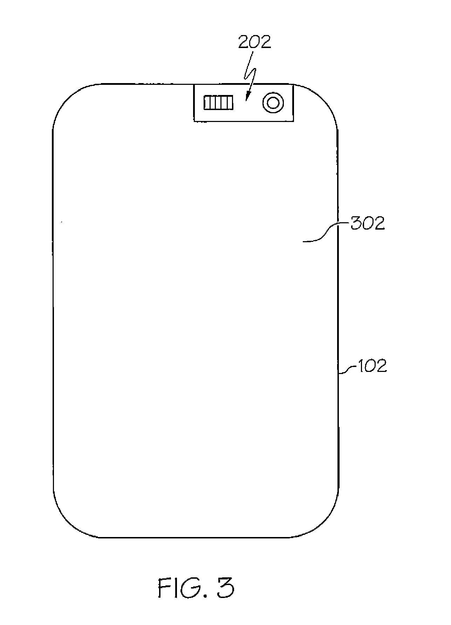

FIG. 3 shows that the first image capturing device 108 has been rotated towards the rear/back portion 302 of the user device 102 (i.e., the portion of the user device 102 that typically faces away from the user during normal operation and that is substantially opposite direction of the second image capturing device 110). The second image capturing device 110, which also comprises an image capturing system 212, is fixably disposed on the front portion 210 of the user device 102. Stated differently, the second image capturing device 110 is stationary within the device and does not substantially move. The second image capturing device 110 is able to capture images 112 from this fixed position via the image capturing system 212.

Returning to FIG. 2, FIG. 2 also shows a field of view of each image capturing device 108, 110 as indicated by the two sets of dashed lines, 214, 216. The field of view 214 of the first image capturing device 108 can be dynamically changed by rotating the first image capturing device 108 between the front 210 and rear 302 portions of the user device 102. However, the field of view 216 of the second image capturing device 110 is fixed. In this example, the field of view 214, 216 of the image capturing devices 108, 110 overlap such that the images 112 captured by the first and second image capturing devices 108, 110 are stereoscopically offset with respect to each other.

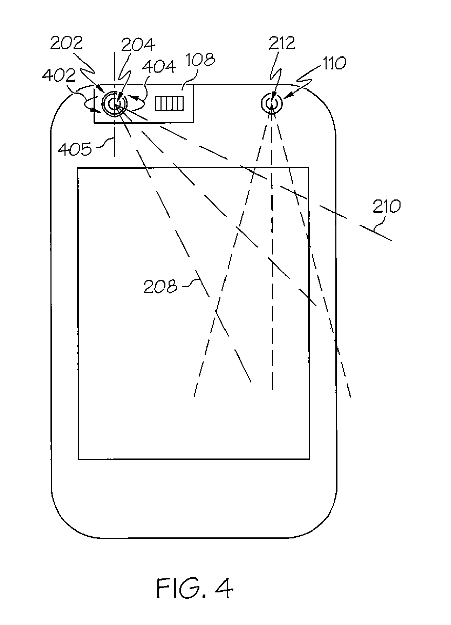

In addition to being rotatable along a first optical axis 205 (e.g., rotatable between the front portion 210 and rear portion 302 of the user device 102), the image capturing system 204 of the first image capturing device 108 is able to swivel within the housing 202 along a second optical axis 405 that intersects the first optical axis 205 as the housing 202 remains fixed, as indicated by the arrows 402, 404 in FIG. 4. This second optical axis 405 can allow movement, for example, towards the left side 406 and right side 408 of the device 102 when the user device 102 is held in a portrait position. Alternatively, the housing 202 can rotate along the first and second optical axes 205, 405 independently of the image capturing system 204 of the first image capturing device 108. This allows the user to position the illumination system 111 independent of the image capturing system 204. In addition, the image capturing system 204 of the first image capturing device 108 can be configured to swivel along the first optical axis 205 discussed above. In this example, the housing 202 can be fixed or can move independent of the image capturing system 204. Therefore, the user can further adjust the field of view of the first image capturing device 108 with respect to the field of view of the second image capturing device 110, as shown in FIG. 4. The housing 202 and/or the image capturing system 204 can be locked at any position to prevent unwanted movement thereof and subsequently unlocked from a given position.

It should be noted that when the first image capturing device 108 is rotated to the front portion 210 of the user device 102, a stereoscopic image capturing mode is activated. In this mode, an optical axis 205 of the first image capturing device 108 is substantially parallel to an optical axis 207 of the second image capturing device 110. This allows the image capturing devices 108, 110 to capture the correct images for stereoscopic display thereof. In another example, the optical axis of the first image capturing device 108 and the optical axis of the second image capturing device 110 are separated by a distance of between approximately 55 mm to 70 mm. This allows for hyperstereo and hypostereo effects to be perceived by the user of the device 102.

The capturing device monitor 116 of the image capturing manager 114 monitors at least the first image capturing device 108 to determine its position. As discussed above, the first image capturing device 108 is able to face the front portion 210, the rear portion 302, and any portion therebetween of the user device 102. When the capturing device monitor 116 determines that the first image capturing device 108 is rotated such that its image capturing system 204 is positioned at the rear portion 302 of the user device 102, the capturing mode adjuster 118 changes (or maintains) a capturing mode of user device 102 to a non-stereoscopic mode where each image capturing device 108, 110 is operated independent of each other. Alternatively, the capturing device monitor 116 can also detect when the field of views 214, 216 of each capturing device 108, 110 do not overlap. For example, the direction of the first image capturing device may be other than substantially the direction of the second image capturing device. In response to the field of views 214, 216 not overlapping, the capturing mode adjuster 118 changes (or maintains) a capturing mode of the user device 102 to a non-stereoscopic mode.

However, if the capturing device monitor 116 determines that the first image capturing device 108 is rotated such that its image capturing system 204 is positioned at the front portion 210 of the user device 102, the capturing mode adjuster 118 changes (or maintains) a capturing mode of user device 102 to a stereoscopic mode where each image capturing device 108, 110 is operated with respect to each other for capturing stereoscopic images. Alternatively, the capturing device monitor 116 can also detect when the field of views 214, 216 of each capturing device 108, 110 overlap. In response to the field of views 214, 216 overlapping, the capturing mode adjuster 118 changes (or maintains) a capturing mode of the user device 102 to a stereoscopic mode. In one example, the capturing device monitor 116 determines whether the field of view 214, 216 of the image capturing devices 108, 110 are facing substantially the same direction and if the optical axes of the first and second image capturing devices 108, 110 are substantially parallel to each other. If so, then the capturing mode adjuster 118 changes (or maintains) a capturing mode of the user device 102 to a stereoscopic mode.

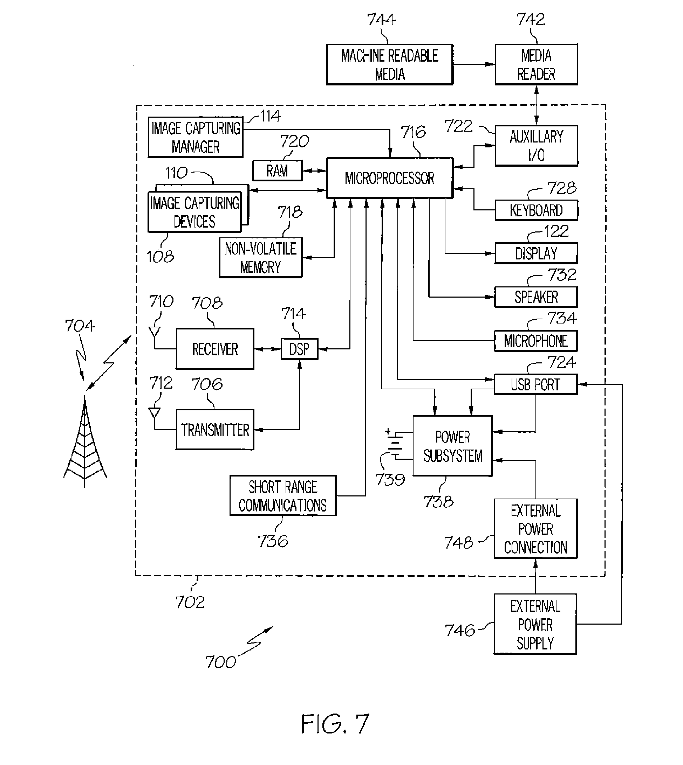

In one example, if the capturing device monitor 116 determines that the user wants to initiate a stereoscopic capturing mode, the image capturing manager 114 can help guide the user to rotate the first image capturing device 108 to the correct position so that the optical axes 205, 207 of the first and second image capturing devices 108, 110 are properly aligned to capture stereoscopic images. For example, as the user begins to rotate the first image capturing device 108 to the front portion 210 of the user device 102, the capturing device monitor 116 can detect this movement and inform the user when the first image capturing device 108 has been rotated such that the optical axes 205, 207 of the first and second image capturing devices 108, 110 are properly aligned. The capturing device monitor 116 can inform the user by, for example, displaying a message on the display 122, emitting a sound through a speaker 732 (FIG. 7), or by any other visual, audible, and/or tactile/haptic notification mechanisms.

The image capturing manager 114 can then display two screens on the display 122, a first screen for the first image capturing device 108 and a second screen for the second image capturing device 110. The current images being detected by each capturing device 108, 110 can be displayed to the user on the respective screen. The user is then able to view the image on the first screen and rotate the first image capturing device 108 so that the image on the first screen corresponds to the image on the second screen for the second image capturing device 110. In another example, the image capturing manager 114 can provide on-screen guides that instruct the user how to position the first image capturing device 108 so that it is properly aligned with the second image capturing device 110 for capturing stereoscopic images.

In one example, the first and second image capturing devices comprise image capturing elements that have substantially the same resolution. However, in another embodiment, one of the image capturing devices comprises a higher resolution image capturing element than the other image capturing device. This is advantageous because it reduces the cost of the user device 102. In this example, during stereoscopic image capturing, the capturing mode adjuster 118 scales down the resolution of the image capturing device with the higher resolution to substantially match the resolution of the image device with the lower resolution. In another example, since each of the images of a stereoscopic image have substantial similarity, the image manager 120 utilizes data from the image captured by the image capturing device with the higher resolution to enhance the resolution of the image captured by the device with the lower resolution to substantially improve the resolution of the stereoscopic image taken by both high and low resolution devices.

During a stereoscopic capturing mode, each image capturing device 108, 110 captures an image 112 that is offset with respect to the other image 112. The stereoscopic display 122 then displays the offset images 112 separately to each eye of the user to produce a three-dimensional effect. In a video conferencing mode, these offset images 112 captured by both the first and second image capturing devices 108, 110 are transmitted to another device 104. The stereoscopic system on the other device then displays these offset images 112 separately to each eye of the user to produce a three-dimensional effect. It should be noted that any type of stereoscopic technology is applicable to the examples of the present invention. It is also assumed that one familiar with the art is also familiar with stereoscopy and presenting three-dimensional information to a user. Therefore, a more detailed discussion with respect to presenting stereoscopic images is not given.

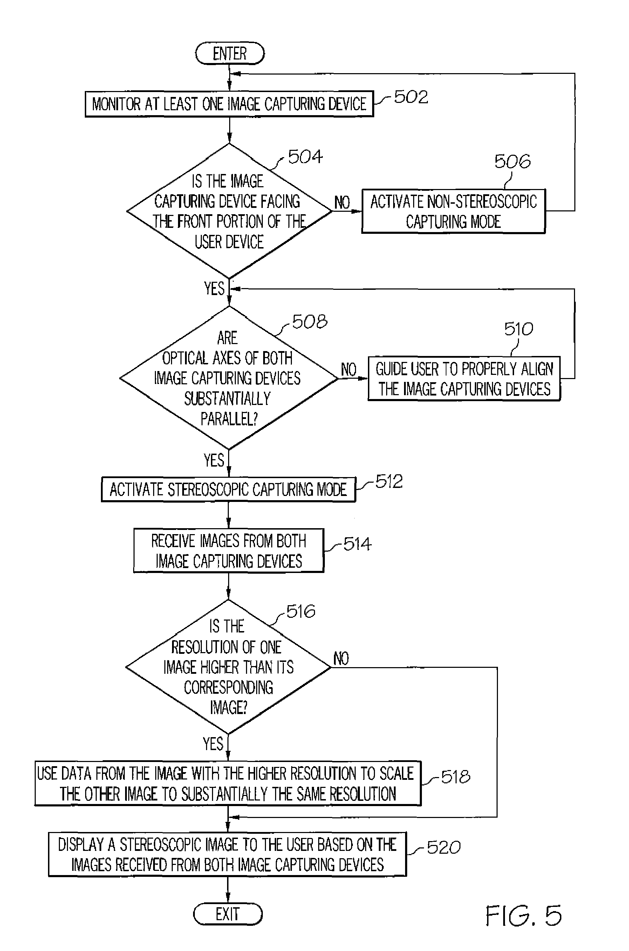

FIG. 5 is a flow diagram for an image capture management process 500. The image capture management process 500 automatically changes an image capturing mode from non-stereoscopic to stereoscopic based on the position of a rotatable image capturing device 108, as discussed above with respect to FIGs. 1-4. The image capture management process 500 is performed by the image capture manager 114 of the user device 102.

The image capture management process 500 begins by monitoring, at 502, at least one image capturing device 108, 110. A determination is made, at 504, as to whether the first image capturing device 108 is facing the front portion 210 of the user device 102. It should be noted that other determinations with respect to optical axes can be made as well. If the result of this determination is negative, a non-stereoscopic image capturing mode is activated, at 506. The process then continues to monitor at least one image capturing device 108, 110. If the result of this determination is positive, a determination is made, at 508, as to whether the optical axes of both image capturing devices are substantially parallel to each other. If the result of this determination is negative, the user is guided to properly align the image capturing devices 108, 110, at 510. The process continues to determine of the optical axes of both image capturing devices are substantially parallel to each other. If the result of the determination, at 508, is positive, a stereoscopic capturing mode is activated, at 512.

Images 112 from both image capturing devices 108, 110, at 514, are received. A determination is made, at 516 as to whether the resolution of one of the images from one of the image capturing devices 108, 110 is higher than its corresponding image from the other image capturing device 108, 110. If the result of this determination is negative, a stereoscopic image, at 520, is displayed to the user on the display 122 based on the images 112 received from both image capturing devices 108, 110. If the result of this determination is positive, data from the image with the higher resolution, at 518, is used to scale the image with the lower resolution to substantially the same resolution as the image with the higher resolution. A stereoscopic image, at 520, is displayed to the user on the display 122 based on the images 112 received from both image capturing devices 108, 110.

As can be seen from the above discussion, various examples of the present invention provide a portable electronic device comprising non-stereoscopic and stereoscopic image capturing modes. One advantage is that one or more examples only require two image capturing devices to provide both of these image capturing modes. Another advantage is that one or more examples automatically switch between non-stereoscopic and stereoscopic image capturing modes based on the position of the rotatable image capturing device.

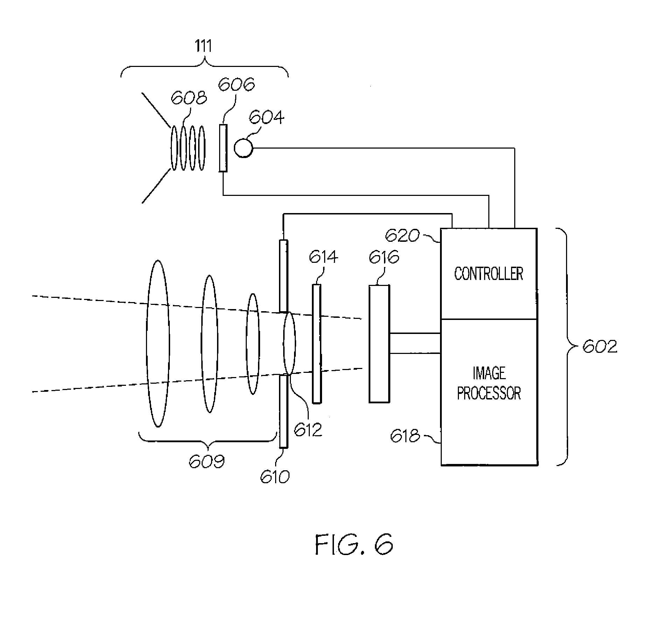

FIG. 6 is a block diagram illustrating various components of the image capturing devices 108, 110. In particular, FIG. 6 shows that an image capturing device 108, 110, such as the first imaging capturing device 108, comprises an illumination system 111 and an image capturing system 602, such as the image capturing systems 204, 212. However, other image capturing devices, such as the second image capturing device 110, do not include an illumination system 111. In one example, the illumination system 111 includes a light source 604, such as a light emitting diode (LED) light source, a micro-liquid crystal (LCD) display 606, and a lens array 608. In this example, the illumination system is in the form of a micro-projector for projecting light therefrom. However, other configurations are also applicable.

In this example, the micro-LCD 606 conditions the light source 604 and the lens array 608 aligned in an axis, for providing a flash. The lens array 608 is covered by a protective cover. The micro-LCD 606 permits color and luminance conditioning and control across the full field of the image for providing a generally uniform luminance and color across the image field. Thus, a yellow light can be provided by coloring the micro-LCD 606 to thereby color the light from the light source 604. Similarly, the luminance can be controlled in localized areas across the full field of the image by varying the luminance in localized areas on the micro-LCD 606, thereby varying the luminance across the field of the image. Therefore, the flash output can be controlled to aid in correcting vignetting, a reduction of image luminance or saturation at the periphery compared to the image center. In this example, the luminance is varied by controlling the flash output from the light source 604 using the micro-LCD 606 to provide a more uniform luminance across the field of the image.

The image capturing system 602 includes lenses 609 through which light passes. The outermost one of the lenses is covered by a suitable protective surface for protecting the lenses 609. The light passes from the lenses 609 through a shutter 610, through a suitable fixed diaphragm 612, through a band-pass filter 614 for filtering out, for example, high and low frequency light while allowing visible light to pass through, and to an image sensor 616. In this example, the image capturing system 602 includes the mechanical shutter 610. Alternatively, the image capturing system 602 can be constructed without a mechanical shutter 610. An image processor 618 is connected to the image sensor 616 for capturing an image and a controller 620 controls the illumination system 111 to provide adjusted flash output.

In one example, the controller 620 is a functional unit that forms part of the image processor 618. It will be appreciated that the controller 620 can be a separate unit connected to the image processor 618, however. In another example, the image capturing manager 114 is coupled to the image processor 618 and/or controller 620 as well. This allows the image capturing manager 114 to monitor the image capturing devices 108, 110 and manage any images captured by these devices 108, 110, as discussed above. Also, a single image processor 618 or multiple image processors 618 can be used for multiple image capturing devices 108, 110 disposed on the user device 102. Those familiar with the art will understand that other features or functional units such as timer and driver components are also provided. Such features and functional units are not shown in FIG. 6 for the purpose of clarity of illustration and description.

The lenses 609, the shutter 610, and the diaphragm 612 together receive light when the image capturing device 108, 110 is in use and direct light through the filter 614 toward the image sensor 616. The shutter 610 can control the amount of light that is allowed to pass through the lenses 609 to the image sensor 616. The image processor 618 determines, based on the received light, the luminance characteristics of the light and the color characteristics of the light. The luminance characteristics can include, for example, localized over-bright areas and localized dark (under-bright) areas. The color characteristics can include the color of the ambient light (relative luminance of primary color components) passing through the lenses 609 to the image sensor 616.

The image sensor 616 includes, for example, a charge coupled device (CCD) sensor surface for receiving the light that passes through the lenses 609, shutter 610, fixed diaphragm 612, and filter 614. The light received at the image sensor 616 is converted to electrical signals by photo-electric conversion of light received at each pixel of the sensor surface of the image sensor 616 to a signal. The signals from all of the pixels together form an image signal that is used in creating a digital image on display 122 of the user device 102. Thus, each pixel of the sensor surface is sensitive to each of the primary color components and to the luminance of the light for conversion into a signal that forms part of the image signal.

The image processor 618 receives the signals that form the image signal from the image sensor 616 and processes the signals to determine the color characteristics and the luminance characteristics referred to above. Based on the color characteristics and luminance characteristics of the image signal, the controller 620 controls illumination system. The image processor 618 determines if the illumination source is to be used based on the luminance level of the signals that together form the image signal. It will be appreciated that the image processor 618 determines if the illumination source is to be used if the flash output is determined automatically, for example, by setting the flash to an automatic setting. The controller 620 then controls the illumination source accordingly.

The image processor 618 also determines the color characteristics (relative luminance of primary color components) of the light including determining the color of the ambient light and, based on the color characteristics, the controller 620 conditions the flash accordingly. Thus, the controller 620 colors the light of the flash based on the color of the ambient light by controlling the micro-LCD 606 to filter the light from the light source 604. The image processor 618 further determines the luminance characteristics of the signals and conditions the flash accordingly. Thus, the controller 620 controls the micro-LCD 606 to attenuate the light of the flash in localized regions across the flash field to provide darker and brighter areas of the flash and thereby provide better uniformity to the level of luminance across all areas of the image.

The speed of the shutter 610 can be controlled by the controller 620 for controlling the amount of light that passes through to the image sensor 616. Alternatively, the light received at the image sensor 616 can be controlled electronically based on time of exposure of the lines of the image sensor 616 to light before reading out. Thus, the shutter 610 is optional.

FIG. 7 is a block diagram of a portable electronic device and associated components 700 in which the systems and methods disclosed herein may be implemented. In this example, a portable electronic device 702 is the user device 102 of FIG. 1 and is a wireless two-way communication device with voice and data communication capabilities. Such electronic devices communicate with a wireless voice or data network 704 using a suitable wireless communications protocol. Wireless voice communications are performed using either an analog or digital wireless communication channel. Data communications allow the portable electronic device 702 to communicate with other computer systems via the Internet. Examples of electronic devices that are able to incorporate the above described systems and methods include, for example, a data messaging device, a two-way pager, a cellular telephone with data messaging capabilities, a wireless Internet appliance, a tablet computing device or a data communication device that may or may not include telephony capabilities.

The illustrated portable electronic device 702 is an example electronic device that includes two-way wireless communications functions. Such electronic devices incorporate communication subsystem elements such as a wireless transmitter 706, a wireless receiver 708, and associated components such as one or more antenna elements 710 and 712. A digital signal processor (DSP) 714 performs processing to extract data from received wireless signals and to generate signals to be transmitted. The particular design of the communication subsystem is dependent upon the communication network and associated wireless communications protocols with which the device is intended to operate.

The portable electronic device 702 includes a microprocessor 716 that controls the overall operation of the portable electronic device 702. The microprocessor 716 interacts with the above described communications subsystem elements and also interacts with other device subsystems such as non-volatile memory 718 and random access memory (RAM) 720. The non-volatile memory 718 and RAM 720 in one example contain program memory and data memory, respectively. Also, the images 112 can be stored in the non-volatile memory 718 as well. The microprocessor 716 also interacts with the image capture manager 114, an auxiliary input/output (I/O) device 722, the first and second image capturing devices, 108, 110, a Universal Serial Bus (USB) Port 724, a display 122, a keyboard 728, a speaker 732, a microphone 734, a short-range communications subsystem 736, a power subsystem 738, and any other device subsystems.

A power supply 739, such as a battery, is connected to a power subsystem 738 to provide power to the circuits of the portable electronic device 702. The power subsystem 738 includes power distribution circuitry for providing power to the portable electronic device 702 and also contains battery charging circuitry to manage recharging the battery power supply 739. The power subsystem 738 includes a battery monitoring circuit that is operable to provide a status of one or more battery status indicators, such as remaining capacity, temperature, voltage, electrical current consumption, and the like, to various components of the portable electronic device 702. An external power supply 746 is able to be connected to an external power connection 748.

The USB port 724 further provides data communication between the portable electronic device 702 and one or more external devices. Data communication through USB port 724 enables a user to set preferences through the external device or through a software application and extends the capabilities of the device by enabling information or software exchange through direct connections between the portable electronic device 702 and external data sources rather than via a wireless data communication network.

Operating system software used by the microprocessor 716 is stored in non-volatile memory 718. Further examples are able to use a battery backed-up RAM or other non-volatile storage data elements to store operating systems, other executable programs, or both. The operating system software, device application software, or parts thereof, are able to be temporarily loaded into volatile data storage such as RAM 720. Data received via wireless communication signals or through wired communications are also able to be stored to RAM 720. As an example, a computer executable program configured to perform the capture management process 500, described above, is included in a software module stored in non-volatile memory 718.

The microprocessor 716, in addition to its operating system functions, is able to execute software applications on the portable electronic device 702. A predetermined set of applications that control basic device operations, including at least data and voice communication applications, is able to be installed on the portable electronic device 702 during manufacture. Examples of applications that are able to be loaded onto the device may be a personal information manager (PIM) application having the ability to organize and manage data items relating to the device user, such as, but not limited to, e-mail, calendar events, voice mails, appointments, and task items. Further applications include applications that have input cells that receive data from a user.

Further applications may also be loaded onto the portable electronic device 702 through, for example, the wireless network 704, an auxiliary I/O device 722, USB port 724, short-range communications subsystem 736, or any combination of these interfaces. Such applications are then able to be installed by a user in the RAM 720 or a non-volatile store for execution by the microprocessor 716.

In a data communication mode, a received signal such as a text message or a web page download is processed by the communication subsystem, including wireless receiver 708 and wireless transmitter 706, and communicated data is provided the microprocessor 716, which is able to further process the received data for output to the display 726 (such as the display 122 in FIG. 1), or alternatively, to an auxiliary I/O device 722 or the USB port 724. A user of the portable electronic device 702 may also compose data items, such as e-mail messages, using the keyboard 728, which is able to include a complete alphanumeric keyboard or a telephone-type keypad, in conjunction with the display 122 and possibly an auxiliary I/O device 722. Such composed items are then able to be transmitted over a communication network through the communication subsystem.

For voice communications, overall operation of the portable electronic device 702 is substantially similar, except that received signals are generally provided to a speaker 732 and signals for transmission are generally produced by a microphone 734. Alternative voice or audio I/O subsystems, such as a voice message recording subsystem, may also be implemented on the portable electronic device 702. Although voice or audio signal output is generally accomplished primarily through the speaker 732, the display 122 may also be used to provide an indication of the identity of a calling party, the duration of a voice call, or other voice call related information, for example.

Depending on conditions or statuses of the portable electronic device 702, one or more particular functions associated with a subsystem circuit may be disabled, or an entire subsystem circuit may be disabled. For example, if the battery temperature is low, then voice functions may be disabled, but data communications, such as e-mail, may still be enabled over the communication subsystem.

A short-range communications subsystem 736 provides for communication between the portable electronic device 702 and different systems or devices, which need not necessarily be similar devices. For example, the short-range communications subsystem 736 may include an infrared device and associated circuits and components or a Radio Frequency based communication module such as one supporting Bluetooth^{®} communications, to provide for communication with similarly-enabled systems and devices.

A media reader 742 is able to be connected to an auxiliary I/O device 722 to allow, for example, loading computer readable program code of a computer program product into the portable electronic device 702 for storage into non-volatile memory 718. In one example, computer readable program code includes instructions for performing the capture management process 500, described above. One example of a media reader 742 is an optical drive such as a CD/DVD drive, which may be used to store data to and read data from a computer readable medium or storage product such as computer readable storage media 744. Examples of suitable computer readable storage media include optical storage media such as a CD or DVD, magnetic media, or any other suitable data storage device. Media reader 742 is alternatively able to be connected to the electronic device through the USB port 724 or computer readable program code is alternatively able to be provided to the portable electronic device 702 through the wireless network 704.

The present subject matter can be realized in hardware, software, or a combination of hardware and software. A system can be realized in a centralized fashion in one computer system, or in a distributed fashion where different elements are spread across several interconnected computer systems. Any kind of computer system - or other apparatus adapted for carrying out the methods described herein - is suitable. A typical combination of hardware and software could be a general purpose computer system with a computer program that, when being loaded and executed, controls the computer system such that it carries out the methods described herein.

The present subject matter can also be embedded in a computer program product, which comprises all the features enabling the implementation of the methods described herein, and which - when loaded in a computer system - is able to carry out these methods. Computer program in the present context means any expression, in any language, code or notation, of a set of instructions intended to cause a system having an information processing capability to perform a particular function either directly or after either or both of the following a) conversion to another language, code or, notation; and b) reproduction in a different material form.

Each computer system may include, inter alia, one or more computers and at least a computer readable medium allowing a computer to read data, instructions, messages or message packets, and other computer readable information from the computer readable medium. The computer readable medium may include computer readable storage medium embodying non-volatile memory, such as read-only memory (ROM), flash memory, disk drive memory, CD-ROM, and other permanent storage. Additionally, a computer medium may include volatile storage such as RAM, buffers, cache memory, and network circuits.

Although specific embodiments of the subject matter have been disclosed, those having ordinary skill in the art will understand that changes can be made to the specific embodiments without departing from the spirit and scope of the disclosed subject matter. The scope of the disclosure is not to be restricted, therefore, to the specific embodiments, and it is intended that the appended claims cover any and all such applications, modifications, and embodiments within the scope of the present disclosure.

## Claims

1. A portable electronic device comprising:
a first image capturing device (108) configured to capture a first image in substantially a first direction at a first position and a second image in at least substantially a second direction at a second position;
a second image capturing device (110) configured to capture a third image in substantially the first direction at a third position; and
a processor (716) coupled to the first (108) and second (110) image capturing devices for generating a representation of a stereoscopic image based on the first and third images.

2. The portable electronic device of claim 1, where at least one of the first image capturing device (108) and the second image capturing device (110) is rotatable.

3. The portable electronic device of claim 2, where a housing (202) of the first image capturing device (108) comprises at least one illumination system (111) that rotates with the first imaging capturing device (108) for illuminating the first and second images and further where the illumination system (111) illuminates the third image captured by the second image capturing device (110) when the first image capturing device (108) is rotated in the first direction.

4. The portable electronic device of any of claims 1, 2, and 3, where the method further comprises:
determining that a first image from one of the first image capturing device (108) and the second image capturing device (110) comprises a higher resolution than a second image from the other one of the first image capturing device (108) and the second image capturing device (110); and
scaling the second image to have a resolution that is substantially similar to the higher resolution of the first image based on data from the first image.

5. The portable electronic device of any of claims 1, 2, 3, and 4, the processor further comprising:
an image capturing manager (118) configured to perform a method comprising:
monitoring at least the first image capturing device (108);
determining a direction of the first image capturing device (108); and
activating one of a non-stereoscopic image capturing mode and a stereoscopic image capturing mode based on the direction of the first image capturing device (108),
where activating a non-stereoscopic image capturing mode comprises:
determining that the direction of the first image capturing device (108) is other than substantially a direction of the second image capturing device (110); and
activating the non-stereoscopic image capturing mode in response to determining that the direction of the first image capturing device (108) is other than substantially the direction of the second image capturing device (110), and
where activating a stereoscopic image capturing mode comprises:
determining that the direction of the first image capturing device (108) is substantially similar to a direction of the second image capturing device (110); and
activating the stereoscopic image capturing mode in response to determining that the direction of the first image capturing device (108) is substantially similar to a direction of the second image capturing device (110).

6. A method on a portable electronic device, the method comprising:
monitoring at least one of a first image capturing device (108) and a second image capturing device (110), where the first image capturing device (108) is configured to capture an image in substantially a first direction at a first position and an image in at least substantially a second direction at a second position, and where the second image capturing device (110) is configured to capture an image in a least substantially the first direction;
determining a direction of the first image capturing device (108); and
activating one of a non-stereoscopic image capturing mode and a stereoscopic image capturing mode based on the direction of the first image capturing device (108).

7. The method of claim 6, where the stereoscopic image capturing mode is activated, and where a first image is received from the first image capturing device (108) and
a second image is received from the second image capturing device (110);
the method further comprises:
displaying a stereoscopic image based on the first image and the second image.

8. The method of any of claims 6 and 7, where activating one of a non-stereoscopic and a stereoscopic image capturing mode comprises:
determining that the direction of the first image capturing device (108) is substantially opposite a direction of the second image capturing device (110); and
activating the non-stereoscopic image capturing mode in response to determining that the direction of the first image capturing device (108) is substantially opposite a direction of the second image capturing device (110).

9. The method of any of claims 6, 7, and 8, where activating one of a non-stereoscopic and a stereoscopic image capturing mode comprises:
determining that the direction of the first image capturing device (108) is substantially similar to a direction of the second image capturing device (110); and
activating the stereoscopic image capturing mode in response to determining that the direction of the first image capturing device (108) is substantially similar to a direction of the second image capturing device (110).

10. The method of claim any of claims 6, 7, 8, and 9, further comprising:
determining that a first image from one of the first image capturing device (108) and the second image capturing device (110) comprises a higher resolution than a second image from the other one of the first image capturing device (108) and the second image capturing device (110); and
scaling the second image to have a resolution that is substantially similar to the higher resolution of the first image based on data from the first image.

11. A computer program product comprising:
a storage medium readable by a processing circuit and storing instructions for execution by the processing circuit for performing a method comprising:
monitoring at least one of a first image capturing device (108) and a second image capturing device (110), where the first image capturing device (108) is configured to capture an image in substantially a first direction at a first position and an image in at least substantially a second direction at a second position, and where the second image capturing device (110) is configured to capture an image in a least substantially the first direction;
determining a direction of the first image capturing device (108); and
activating one of a non-stereoscopic image capturing mode and a stereoscopic image capturing mode based on the direction of the first image capturing device (108).

12. The computer program product of claim 11, where the stereoscopic image capturing mode is activated, and where a first image is received from the first image capturing device (108) and
a second image is received from the second image capturing device (110);
the method further comprises:
displaying a stereoscopic image based on the first image and the second image.

13. The computer program product of any of claims 11 and 12, where activating one of a non-stereoscopic and a stereoscopic image capturing mode comprises:
determining that the direction of the first image capturing device (108) is substantially opposite a direction of the second image capturing device (110); and
activating the non-stereoscopic image capturing mode in response to determining that the direction of the first image capturing device (108) is substantially opposite a direction of the second image capturing device (110).

14. The computer program product of any of claims 11, 12, and 13, where activating one of a non-stereoscopic and a stereoscopic image capturing mode comprises:
determining that the direction of the first image capturing device (108) is substantially similar to a direction of the second image capturing device (110); and
activating the stereoscopic image capturing mode in response to determining that the direction of the first image capturing device (108) is substantially similar to a direction of the second image capturing device (110).

15. The computer program product of any of claims 11, 12, 13, and 14, the method further comprising:
determining that a first image from one of the first image capturing device (108) and the second image capturing device (110) comprises a higher resolution than a second image from the other one of the first image capturing device (108) and the second image capturing device (110); and
scaling the second image to have a resolution that is substantially similar to the higher resolution of the first image based on data from the first image.
